# EUROPEAN PATENT APPLICATION

(11) **EP 0 698 547 A1**
(43) Date of publication of application: **28.02.1996**
(21) Application number: 95830333.1
(22) Date of filing: 27.07.1995
(51) Int. Cl.: B62D 53/00, B60G 17/005, B61D 3/18

(54) **Bump range reducing device for axle suspensions of a road-rail intermodular semitrailer used for leveling the semitrailer at a predetermined position during piggybacking onto railway wagons**

(30) Priority: 03.08.1994 IT PS940011
(71) Applicant: E. BARTOLETTI S.p.A., I-47100 Forli (FO) (IT)
(72) Inventor: Filippi, Antonio, I-47100 Forli' (FO) (IT)
(74) Representative: Lanzoni, Luciano

(57) **Abstract**

The present invention refers to a bump range reducing device for axle (3) suspensions (2) of a road-rail intermodular semitrailer used for levelling the semitrailer at a predetermined position during piggybacking onto railway wagons, which includes a sprang element (4) rotatably secured to the frame (5) of the semitrailer on at least one of its axles (3), and has operative ends (6,7) fitted in such a way so that they may be joined to the frame (5) and the axle (3).

Furthermore, the device (1) includes actuator means (8) of the rotation of the element (4) in relation to the frame (5) from an active position to an inactive position. The active position corresponds to the piggybacking onto railway wagons, in which the element (4) is placed between the frame (5) and the axle (3) in such a way as to reduce the maximum reciprocal approach to a predetermined value so that when the suspension (2) reaches the predetermined value, it is inhibited. The inactive position corresponds to the road use of the semitrailer, in which the operative ends (6,7) of the said element (4) are detached from the frame (5) and from the axle (3).

## Description

The invention relates to a bump range reducing device for axle suspensions of a road-rail intermodular semitrailer used for levelling the semitrailer at a predetermined position during piggybacking onto railway wagons.

As is well known, the use of intermodular road-rail transportation is, at present, widely expanding, especially due to environmental problems.

With this type of transportation, the freight loaded onto a highway trailer truck is, in part, transported on a road route and, in part, on a railway route. During the railway transfer, the freight remains on the road vehicle and is transported together with the vehicle onto wagons (called "poche") which are standardized for this purpose.

The above mentioned wagons are supplied with a set of fixtures used to anchor the semitrailer.

Ananchoring seat can be found among these fixtures. This seat slides on its own slide guides enabling it to adapt itself to different types of semitrailers and is intended to support the front part of the semitrailer by securing the pin to it, by which the semitrailer pivots on its own tractor vehicle during road use.

The aim of the present invention, as characterized in the appended claims, is to solve the problem of allowing for piggybacking of semitrailers onto railway wagons levelled to the position of the seat.

The invention, as is characterized in the appended claims, attains its purpose by means of a bump range reducing device for the rear axle pneumatic suspensions of intermodular semitrailers, which may be activated during piggybacking onto a railway wagon.

The said device includes a sprang element placed on the rear axles of the semitrailer which also revolves on the frame, under the action of suitable actuator means, in such a way as to interpose itself to the frame and the axle during railway transport, thus reducing the relative approach, otherwise allowed by the pneumatic suspensions, by means of the joined operative ends of the device which rest on the frame and the axle.

The principal aim of the present invention is substantially to facilitate the levelling highway trailer trucks onto railway wagons in a fast, stable and safe way.

Further advantages and characteristics of the present invention will better emerge from the following detailed description, made with reference to the accompanying drawings, which represent a preferred embodiment here illustrated in the form of a non-limiting example, and in which:
- figure 1 shows a side view of the present invention fixed to an axle of an intermodular semitrailer;
- figure 2 shows a rear view of the device in figure 1 in which some details have been omitted to better emphasize certain technical characteristics;
- figure 3 shows a partial topplan view of an axle of the semitrailer onto which the device acts, according to the invention;
- figure 4 shows a side view of a rear part of the semitrailer in which the reducing device is controll in relation to the setting assumed by the joint guard of the semitrailer;
- figure 5 shows an enlargement of several details illustrated in figure 4;
- figure 6 shows a partial view, on an enlarged scale, of the front part of the semitrailer fitted with a common anti rolling device;
- figure 7 shows a diagram of the automatic command of the reducing device, according to the present invention.

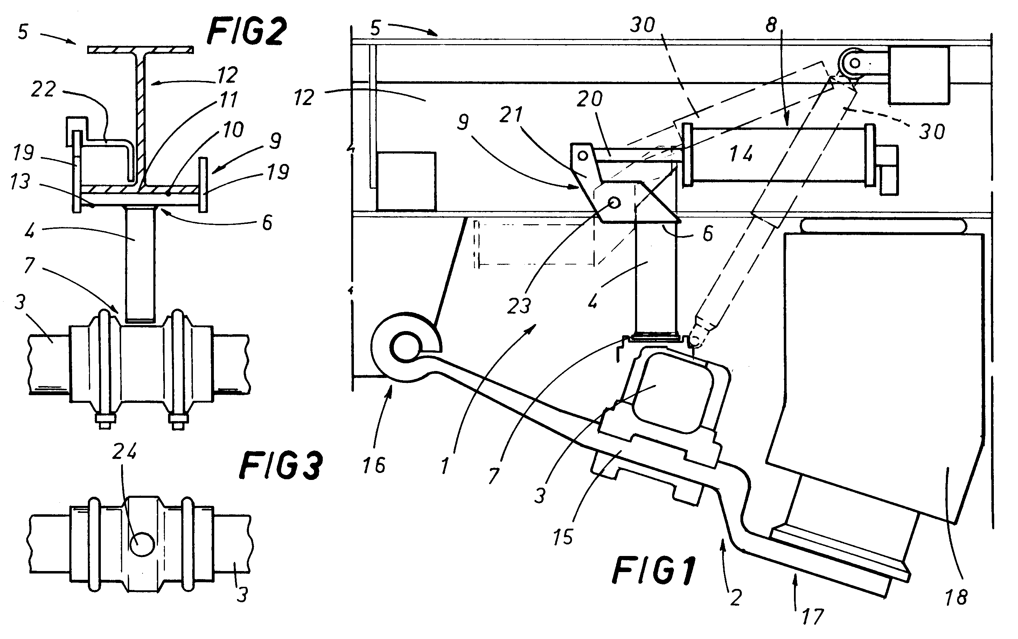

Complying with the attached figures, figure 1 shows a detail of a frame (5) of the road-rail intermodular semitrailer having a wheel carier axle (3). This is supported by pneumatic suspensions (2) which particularly include a flexible element (15), fitted with its own first end (16) hinged to the frame (5), and connected at an opposite end (17) to an air cushion (18) between the same flexible part (15) and the frame (5).

A bump range reducing device (1) of the suspensions (2) joined to the axle (3) is fitted onto the frame (5). Its purpose, which will better emerge from the following description, is to facilitate the levelling of the semitrailer at a predetermined position during piggybacking onto railway wagons.

The device (1) includes a cylindrically-shaped sprang element (4) rotatably secured to the frame (5) of the semitrailer on at least one of its axles (3). The said sprang element (4) rotates on the frame (5) around a pivot point (23), activated by relative actuator means (8), from an active position to an inactive position. The active position corresponds to the railway transport of the semitrailer where it interacts with the frame (5) and the axle (3) by means of its own operative ends (6, 7). The inactive position corresponds to the road use of the semitrailer where, instead, the sprang element (4) is detached from the frame (5) and from the axle (3).

More specifically, (in figures 1 and 2), the sprang element (4) is preferably supported in an eccentric way by a plate (9) hinged to the frame (5) and fitted with a first face (10), which may be overlapped and rests on a flange (11) of a side member (12) of the frame (5) and with a second and opposing face (13) from which the sprang element (4) is rigidly supported in such a way as to project itself towards the underlying axle (3).

The plate (9) is moreover fitted with lateral projecting parts (19) as to facilitate the correct centering of the sprang element (4) on the frame side member (12).

As far as the actuator means (8) are concerned, as demonstrated in figure 1, these are formed by a cylinder (14), preferably by a fluid cylinder, laterally sustained to the frame side member (12) by a support (22). The rod (20) of the cylinder (14) joins itself to a coupling end (21) of the plate (9), and during activation, allows the plate (9) to rotate around the pivot point (23). In the active position, corresponding with the protrusion of the rod (20) of the cylinder (14), the sprang element (4) sets itself between the frame (5) and the suspension, reducing their maximum reciprocal approach to a predetermined value (corresponding to the horizontal alignment of the semitrailer on the seat of the wagon). Once the predetermined value has been reached, the suspension (2) is inhibited.

On the contrary, in the inactive position, which corresponds to the re-entry of the rod (20) into the cylinder (14), the operative ends (6, 7) of the sprang element (4) are detached from the frame (5) and the axle (3), as shown in figure 1 with a broken line, whereby allowing the complete functioning of the suspensions (2), as required by the road circulation.

The eccentric position of the sprang element (4), in relation to the pivot point (23) of the plate (9), guarantees that the sprang element (4) remains in a stable position, even in the absence of power supply of the cylinder (14), as occurs during rail transport on rails, where the semitrailer is not constrained to its own tractor vehicle.

The present invention is subject to numerous modifications and variations, without falling outside the purpose of the present invention.

Furthermore, all the technical parts and details may be substituted by technically equivalent parts. As simply exemplified, it is understood that a still further embodiment of the sprang element (4) may be formed by a revolving cam configuration of this part.
automatic control means (31) relating to the actuator means (8;14) of the sprang element (4) movement between the active position, which corresponds to piggybacking onto a railway wagon, and the inactive position, which corresponds to the road use of the semitrailer.

If the semitrailer is fitted with a bumper (32), fitted on the frame (5), for movement between its own operative setting for road use, where the joint guard is rigidly connected to the frame (5), and an inactive setting, wherein, instead, the bumper is angularly rotated so as not to interfere with the railway wagon transporting the semitrailer, these control means (31) may command the activation of the movement of the sprang element (4), according to the positioning of the bumper (32). In other words, the sprang element (4) is set in an active position in relation to the inactive setting of the bumper (32), and vice versa.

This solution permits a correct activation of the reducing device without requiring any particular attention or any specific operation, compared to normal operations carried-out by the personnel who load the semitrailer onto the railway wagon.

In fact, as better shown in figures 34, 5 and 7, the control means (31) include a first sensor (33), joined to the bumper (32), and a flow deflector (34) which are connected in a circuit to the actuator means (8;14). The deflector (34) is preferrably represented by a five-way, two operative state monostable valve and is connected in a circuit to a pressure source (41) and, finally, to the cylinder (14), in such a way as to send the air flow into the relative front (39) and rear (40) chambers of the cylinder. The air flow then determines the movement of the sprang element (4) between the active and inactive positions in two opposing directions of movement.

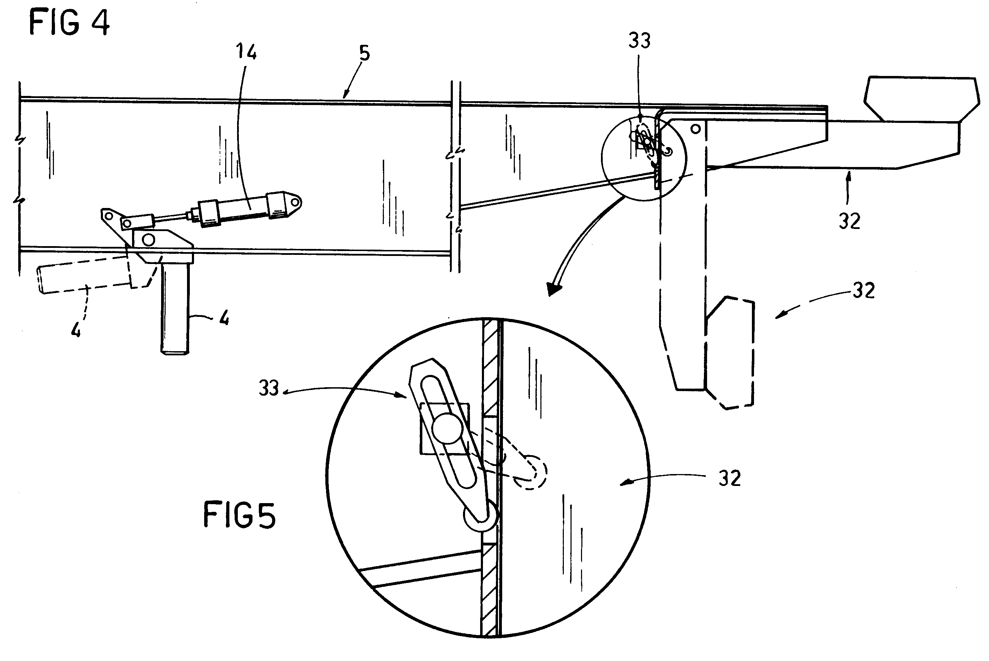

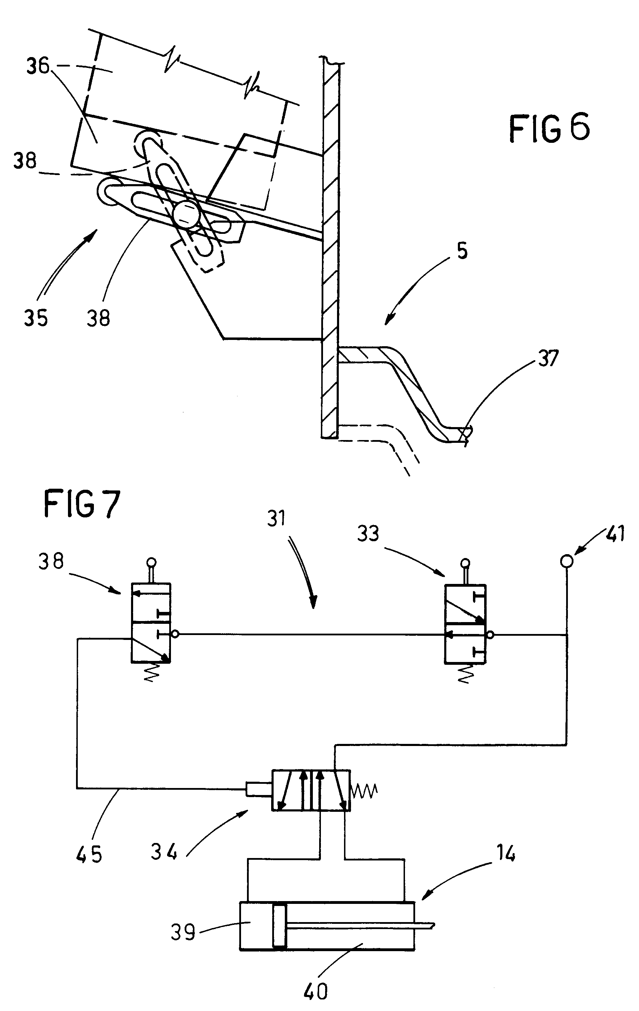

Referring, in particular, to figures 4 and 7, it is further demonstrated that the first sensor (33) and the deflector (34) are connected in a circuit to determine the position of the sprang element (4) in its own inactive position. This coincides with the operative setting during road use of the bumper (32), and vice versa. Therefore, with only the interference which consists in the setting of the bumper (32) during railway transport or during road use, the reducing device is connected or disconnected in a completely automatic way.

The control means (31) also include a second sensor (38), connected in series and in an opposing state (figure 7) to the first sensor (33), in such a way that the setting of the sprang element (4) in its active or inactive position depends on the second sensor (38).

In this case, the second sensor (38) usually executes another automatic function of the reducing device (1). Nevertheless, since the semitrailer is fitted with an anti-levelling device, as the one described in the Italian patents, No. BO 94A000180 and BO 94U000092, in the name of the same applicant, the second sensor (38), in an operative combination with the first sensor (33), permits the automatic pre-setting of the semitrailer for different freight conditions in relation to the type of railway wagon, onto which it is mounted, the type of railway line and the loading gauge of the railway wagon allowed by the country, in which the railway wagon is crossing.

The above mentioned anti-levelling device for piggybacking onto railway wagons, particularly comprises supports (35) (schematically represented in figure 6) that sustain the securing blocks (36) of the semitrailer to the railway wagon which may be joined to screw spikes (not represented because completely conventional), as to permit the semitrailer to be rigidly anchored to the railway wagon, as similarly allowed for the transport of containers. In the above mentioned circumstances, during road circulation of the semitrailer, the supports (35) sustain the blocks (36) above a face (37) designed to join itself to a thrust-bearing block of a road tractor. The said blocks are, instead, positioned below this face (37) when the semitrailer is piggybacked onto a railway wagon which allows it to be anchored precisely with the above mentioned screw spikes.

In this case, by joining the second sensor (38) to the securing block (36) and connecting it in a circuit, in series and in opposing states to the first sensor (33), as demonstrated in figure 7, it results that the setting of the sprang element (4), in its active or inactive position, depends on the presence of the block (36) above the said face (37), and vice versa.

In other words, when the block (36) is in a rest position and the bumper (32) is lifted into a non-operative condition, the sprang element (4) is set in its active position so that the suspension (2) is inhibited and the semitrailer may be secured to the seat and tanks of the railway wagon; when the block (36) is in a rest position and the bumper (32) is lowered to the road use setting of the semitrailer, the sprang element (4) is set in its inactive position corresponding to the total functioning of the suspension (2); finally, when the block is brought under the face to be secured to the railway wagon with screw spikes, and the bumper (32) is lifted into the non-operative condition, the sprang element (4) returns to its inactive position.

In conclusion, the reducing device described above allows for maximum loading versatility of the semitrailer onto a railway wagon which guarantees the possibility to transport the semitrailer to its final destination, departing from Italy on a "3 type poche" railway wagon, and returning with the semitrailer on a "1 type poche" railway wagon loaded onto a seat and tank. This characteristic shows the advantage of eliminating the undesired recurrence of lengthy waiting times for the semitrailer or the advantage of recurring to road use of the semitrailer when a "3 type poche" railway wagon, suitable for this type of specific transportation, is not available.

In the preferred embodiment of the device, as shown in the appended drawings, preferably all the parts of the control means (31) are of a technological pneumatic type.

In particular, the first and second sensors include a three-way two-position monostable valve (33,37) connected in series between themselves on a piloting line (39) of the deflector (34) which is also pneumatic. The first valve (33) is joined to the bumper (32) and is normally open. The second valve (37) is joined to the block (36) in such a way as to detect its setting above the face (37) and is, instead, normally closed.

Numerous technological modifications are possible for both the sensors (33,37), as well as for the control means (31), since these may be embodied in a completely equivalent way with regards to their functioning, by also employing electrical technology, electronics or different combinations, such as those of an electro-pneumatic type.

In actual practice, modifications, improvements and variations are obviously possible. These are described in the following claims.

## Claims

1. Bump range reducing device for axle (3) suspensions (2) of a road-rail intermodular semitrailer used for levelling the semitrailer at a predetermined position during piggybacking onto railway wagons, characterized by the fact that this comprises: a sprang element (4) rotatably secured to the frame (5) of the semitrailer on at least one of its axles (3), and has operative ends (6,7) fitted in such a way so that they may be joined to the frame (5) and the axle (3), the said sprang element (4) being able to revolve in relation to the frame (5) from an active position to an inactive position; wherein the active position corresponds to the piggybacking onto railway wagons, in which the said sprang element (4) is placed between the frame (5) and the axle (3) in such a way as to reduce the maximum reciprocal approach to a predetermined value so that when the suspension (2) reaches the predetermined value, it is inhibited; wherein the inactive position corresponds to the road use of the semitrailer, in which the operative ends (6,7) of the said sprang element (4) are detached from the frame (5) and from the axle (3), said device (1) also including restraining mechanisms (50) of said element in said positions.

2. A device as in claim 1, characterized by the fact that said sprang element (4) is eccentrically hinged to said frame (5).

3. A device as in claim 1, characterized by the fact that it includes a plate (9) secured to the frame (5), having a first face (10) which may be overlapped and rests on a flange (11) of a side member (12) of the frame, (5) and a second and opposing face (13) by which the sprang element (4) is projecting supported.

4. A device as in claim 1, characterized by the fact that it includes actuator means (8) of the rotation of said sprang element (4) between said positions.

5. A device as in claim 1, characterized by the fact that said actuator means (8) include a spring cylinder (14).

6. A device as in claim 1, characterized by the fact that it includes a spring (30) joined to said sprang element (4) and secured to said frame (5) in such a way as to be able to maintain said sprang element (4) stable in the indicated positions corresponding to the road use and the railway transport of the semitrailer.

7. A device as in claim 1, characterized by the fact that said sprang element (4) is formed by a revolving cam configuration.

8. A device as in claim 4, characterized by the fact that said actuator means (8) of the rotation of said sprang element (4), in relation to the frame (5), include a fluid cylinder (14).

9. A device as in claim 4, characterized by the fact that said cylinder (14) is of a compressible fluid type.

10. A device as in claim 1, characterized by the fact that said restraining mechanisms (50) include a spring (30) placed between the sprang element (4) and the frame (5).

11. A device as in claims 4 or 5, characterized by the fact that it includes automatic control means (31) of the actuator means (8;14) of the movement of the sprang element (4) between the active position, corresponding to the piggybacking onto railway wagons, and the inactive position, corresponding to the road use of the semitrailer.

12. A device as in claim 11, in which the semitrailer includes a bumper (32) mounted onto the frame (5) for mobility between its own operative setting for road use, where the bumper is rigidly connected to the frame (5), and an inactive setting in which the said bumper is angularly rotated so as not to interfere with the railway wagon which transports the semitrailer; said reducing device (1) is characterized by the fact that the control means (31) command the activation of the movement of the sprang element (4), in relation to the setting of the bumper (32), in such a way that the sprang element (4) sets itself in an active position coinciding with the inactive setting of the bumper (32), and vice versa.

13. A device as in claims 11 or 12, characterized by the fact that said control means (31) include at least a first sensor (33) coupled with the bumper (32) and a flow deflector (34) connected in a circuit to the actuator means (8, 14) to activate, in relation to its own operative conditions, the movement of the sprang element (4) between the active and inactive positions in opposing directions; said first sensor (33) and said deflector (34) are connected in a circuit to determine the setting of the sprang element (4) in its own inactive position coinciding with the operative setting of road use of the bumper (32), and vice versa.

14. A device as in claim 13, characterized by the fact that it includes a second sensor (38) connected in series and in an opposing state to the first sensor (33), in such a way that the setting of said sprang element (4) in its inactive position depends on the second sensor (38).

15. A device as in claims 13 or 14, in which said semitrailer is fitted with an anti-levelling device for piggybacking onto railway wagons; the said device includes supports (35) that sustain securing blocks (36) of the semitrailer to the railway wagon which may be joined to relative anchoring screw spikes; said supports (35) sustain said blocks (36) during road circulation of the semitrailer above a face (37) designed to join itself to a thrust-bearing block of a road tractor; the said blocks, instead, are positioned below the face (37) in relation to the condition of the piggybacking of the semitrailer onto the railway wagon which allows for it to be anchored by means of screw spikes; the said reducing device (1) is characterized by the fact that it includes a second sensor (38) coupled with at least one securing block (36) and connected in series and in an opposing state with the first sensor (33) in such a way that the setting of said sprang element (4), in its inactive position, depends on the presence of the block (36) above the said face (37), and vice versa.

16. A device as in claims 13, 14, or 15, characterized by the fact that said first and second sensors (33,37) are pneumatic.

17. A device as in claims 11, 12, or 13 characterized by the fact that said control means (31) are pneumatic.

18. A device as in claim 14, characterized by the fact that said first and second sensors include threeway, two-position monostable valves (33,37) connected in series between themselves on a piloting line (45) of the deflector (34); the first valve (33) coupled with the bumper (32) is normally open, and the second valve (38) coupled with the block (36) in its setting above the face (37), is, instead, normally closed.
